# EUROPEAN PATENT SPECIFICATION

(11) **EP 3 985 695 B1**
(45) Date of publication and mention of the grant of the patent: **27.12.2023**
(21) Application number: 20290072.6
(22) Date of filing: 19.10.2020
(51) Int. Cl.: H01G 9/02, H01G 11/52, H01M 50/429, H01M 50/44

(54) **SEPARATOR SUITABLE FOR A CAPACITOR, METHOD FOR PRODUCING A SEPARATOR AND CAPACITOR**
FÜR EINEN KONDENSATOR GEEIGNETER SEPARATOR, VERFAHREN ZUR HERSTELLUNG EINES SEPARATORS UND KONDENSATOR
SÉPARATEUR APPROPRIÉ POUR UN CONDENSATEUR, PROCÉDÉ DE FABRICATION D'UN SÉPARATEUR ET CONDENSATEUR

(43) Date of publication of application: 20.04.2022
(73) Proprietor: Glatfelter Scaër SAS, 29390 Scaër (FR)
(72) Inventor: Testa, Mattia, 76547 Sinzheim (DE); Schnelle, Giovanni, 35396 Gießen (DE)
(74) Representative: Dilg, Haeusler, Schindelmann Patentanwaltsgesellschaft mbH

(56) References cited:
- EP-A1- 3 392 930
- EP-A1- 3 573 083
- US-A- 3 785 922
- US-A- 6 074 523
- US-A1- 2006 014 080
- US-A1- 2010 316 912
- US-A1- 2019 252 661

## Description

### FIELD OF THE INVENTION

The present invention relates to a separator suitable for a capacitor, a method of producing a separator and to a capacitor, in particular an aluminum electrolytic capacitor. In particular, the separator may be capable of significantly reducing the Electrical Series Resistance (ESR) of a capacitor.

### BACKGROUND

Capacitors, which are sometimes also denoted as condensers, are devices used for storing electrical energy. In general, a capacitor is essentially composed of two electrodes facing each other and an insulating medium (so-called dielectric) to separate them. The electrodes are usually metallic plates or foils, the dielectric may be vacuum, gases (such as air), liquids (such as mineral or vegetable oils), or solids (such as mica, glass, paper, polymers, etc.).

An important characteristic of a condenser is its capacitance which is a measure of the amount of charges that can be stored on the electrode at a given potential (voltage). The unit of capacitance is farad and it corresponds to a charge of one coulomb at one volt across the terminals of the device. Accordingly, the capacitance may be expressed by the formula: C= Q/E wherein "C" represents the capacitance in farad (F), "Q" represents the charge in coulomb (C) and "E" represents the electric potential in volt (V).

The capacitance of a capacitor generally depends to a great extent on the geometry and nature of both the electrodes and the dielectric medium. Accordingly, the capacitance may also be expressed by the formula: C = e x A / d wherein "e" represents the permittivity of the dielectric medium in F/m, "A" represents the active surface area of the electrodes in m² and "d" (distance) represents the thickness of the dielectric in m.

Aluminum Electrolytic Capacitors (AEC) constitute one of the several categories of capacitors in which typically two aluminum foils electrodes are electrically insulated by a thin aluminum dioxide layer formed on the anode surface. Both the electrodes are spaced by a separator to avoid direct contact and winded up into a cylindrical element. The separator also has the function to take up a liquid electrolyte which is essential for the proper functioning and along with the anode foil for the special properties of an AEC: large capacitance and low internal resistance. The electrolyte impregnated element is cased to prevent leakage and allow proper handling and operating conditions. In general, electrical aluminum capacitors are relatively small, have high capacitance and are produced at lower cost compared to other capacitors types. In recent years, the requirements for electronic devices, the continuous trend toward lighter materials and miniaturization, have pushed developments towards capacitors with lower electrical resistance and lower costs. The separator has a direct impact on the overall performance and cost of the element.

The primary role of the separator is to ensure mechanical separation of the electrodes while holding the liquid electrolyte. As a direct consequence, it reduces the ionic movement (ionic conductivity) of the electrolyte and thus increases the resistance of the capacitor, mores specifically the Electrical Series Resistance (ESR), which to some extent can have an adverse effect on operating performance and lifetime. In the past, a variety of separator designs in terms of fiber composition, thickness, density, number of layer constructions (simplex, duplex, triplex) have been developed to fulfill capacitor requirements in terms of operating conditions (voltage and capacity range, size, temperature, etc.).

Among the separator properties that influences capacitor performance, density is known to be of outmost importance. At a given thickness, the higher the density of the separator (i.e. the more dense the separator), the greater the protection against short circuits and electrical breakdown. On the other hand, such a dense separator negatively affects ion mobility and therefore increases the ESR of the capacitor. Because of their open fiber structure, low density separators have less impact on ion mobility leading to low electrical resistance products. To overcome their limited electrical breakdown resistance, a combination of multiple layers of one-ply separator or two or three-ply separators has been considered by capacitor manufacturers, which however renders its manufacturing more complex and consequently leads to an increase in costs. In addition, issues with mechanical integrity may occur with multilayer separators.

Hitherto known single layer (simplex) separators include three main types:
(a) Separators made from annual plant fibers (such as abaca, hemp, jute, esparto, kenaf, etc.) as a single component or as a mixture, having a density from 0.3 to 0.75 g/cm³. Such separators are commonly produced on inclined wire or roto former technology. They are known to achieve low electrical resistance but are usually expensive because of the specific raw materials used to manufacture them.
(b) High-density kraft separators having a density in the range of 0.75 to 0.95 g/cm³ commonly produced on Fourdrinier type paper machines with wood pulp refined at high drainage index (> 80 °SR) to ensure strong densification of the sheet during manufacturing process. These separators are usually suitable for high voltage applications where protection against short circuits and breakdown voltage is critical. As a counter effect, such high-density products dramatically reduces ionic mobility resulting in higher electrical resistance.
(c) Low-density kraft separators having a density from 0.45 to 0.70 g/cm³ are commonly produced on Fourdrinier or roto-former paper machines. The fiber mix is usually 100% Kraft wood pulp which is refined to a low drainage index (e.g. 10 to 35 °SR) to avoid densifying the product during manufacturing process. Such separators have proven their efficiency in AEC applications and achieve good performance in terms of electrical resistance and cost but are limited to densities as low as 0.45 or 0.50 g/m³ for a thickness of 30 to 60 µm which prevent them from further reducing the level of ESR if densities could be further reduced similar to (a).

An example of a hitherto known separator for aluminum electrolytic capacitors is disclosed in EP 3 573 083 A1, wherein the separator includes at least one layer that is formed from plant fibers and has a dielectric breakdown strength of greater than or equal to 20 kV/mm. Additional prior art disclosing separators comprising e.g. layers containing wood pulps include US 6074523 and EP 3392930. $

Although low-density kraft separators have proven their efficiency in AEC applications, the global market trend goes toward miniaturization and low ESR products. Thus, there is a need for further improvements in terms of ESR of a separator suitable for an aluminum electrolytic capacitor.

### OBJECTS OF THE INVENTION

The present invention aims at overcoming the above described problems and drawbacks. In particular, it may be an object of the present invention to provide a separator suitable for a capacitor, in particular for an aluminum electrolytic capacitor, which exhibits a reduced Electrical Series Resistance (ESR) and can be provided at low cost in terms of both raw material costs and manufacturing process costs.

### SUMMARY OF THE INVENTION

The present inventors have made diligent studies and have found that an ultra-low density (< 0.45 g/cm³) single layer separator made of wood pulp as a main fiber component (or even as the only fiber component) may be produced in a wet-laid process, in particular by means of an inclined wire machine, which exhibits a significant reduction (for instance a 20 to 45% reduction) of the ESR compared to current standard low-density kraft separators available on the market. As a result of such reduced separator ESR, the performance of a capacitor, in particular an aluminum electrolytic capacitor, may be significantly improved. Without wishing to be bound by any theory, the present inventors assume that due to the ability of (in particular inclined wire) wet-laid process to achieve very good sheet formation and lightweight materials, the risk of generating thin spots that would lead to poor mechanical strength and web breaks during manufacturing or customer processing is limited. As a result, a separator having an ultra-low ESR at lower cost compared to annual plant separators or other more sophisticated separators based on regenerated cellulose may be obtained.

Accordingly, the present invention relates to a separator according to claim 1 suitable for a capacitor, in particular an aluminum electrolytic capacitor, wherein the separator is a single layer, inclined wire wet-laid non-woven fabric comprising at least 70 wt.-% of wood pulp, wherein the separator has a density of less than 0.45 g/cm³.

The present invention further relates to a method of producing a separator according to claim 12, wherein the method comprises the steps of forming a non-woven fabric comprising at least 70 wt.-% of wood pulp by a wet-laid process, in particular by means of an inclined wire machine, and drying the non-woven fabric to thereby yield the separator, wherein the separator has a density of less than 0.45 g/cm³.

In addition, the present invention relates to a capacitor according to claim 14, comprising a positive electrode, a negative electrode and a separator having the above features and being interposed between the positive electrode and the negative electrode.

Embodiments of the invention are set forth with the appended dependent claims.

Other objects and many of the attendant advantages of embodiments of the present invention will be readily appreciated and become better understood by reference to the following detailed description of embodiments of the invention.

### DETAILLED DESCRIPTION OF THE INVENTION

Hereinafter, details of the present invention and other features and advantages thereof will be described. However, the present invention is not limited to the following specific descriptions, but they are rather for illustrative purposes only. It should be noted that features described in connection with one exemplary embodiment or exemplary aspect may be combined with any other exemplary embodiment or exemplary aspect, in particular features described with any exemplary embodiment of a separator may be combined with any other exemplary embodiment of a separator, with any exemplary embodiment of a method for producing a separator and with any exemplary embodiment of a capacitor and vice versa, unless specifically stated otherwise.

Where an indefinite or definite article is used when referring to a singular term, such as "a", "an" or "the", a plural of that term is also included and vice versa, unless specifically stated otherwise, whereas the word "one" or the number "1", as used herein, typically means "just one" or "exactly one".

The expression "comprising", as used herein, includes not only the meaning of "comprising", "including" or "containing", but may also encompass "consisting essentially of" and "consisting of".

In a first aspect, the present invention relates to a separator suitable for a capacitor, in particular an aluminum electrolytic capacitor, wherein the separator is a single layer, (in particular inclined wire) wet-laid non-woven fabric comprising at least 70 wt.-% of wood pulp, wherein the separator has a density of less than 0.45 g/cm³.

The term "separator", as used herein, may in particular mean an element (such as a membrane) interposed between a positive electrode and a negative electrode of a capacitor. A separator basically serves to keep the two electrodes apart to avoid direct contact. In addition, a separator may also serve to take up and hold a liquid electrolyte, if applicable.

The term "capacitor", as used herein, may in particular denote a device for storing electrical energy. A capacitor may in particular comprise two electrodes facing each other and an insulating medium (also referred to as a dielectric) between them. The insulating medium may comprise a separator that may be impregnated by a liquid electrolyte.

The term "aluminum electrolytic capacitor", as used herein and which may also be abbreviated as "AEC", may in particular mean a capacitor having electrodes comprising or made of aluminum and having a solid and/or liquid electrolyte. The electrodes may further have a (thin) dielectric layer comprising aluminum oxide (Al₂O₃).

The term "non-woven fabric", as used herein, may in particular mean a web of individual fibers which are at least partially intertwined, but not in a regular manner as in a knitted or woven fabric. In the context of the present application, the non-woven fabric is a wet-laid non-woven fabric, i.e. it has been prepared or formed by means of a wet-laid process. Preferably, the wet-laid non-woven fabric is an inclined wire wet-laid non-woven fabric, i.e. it has been prepared or formed in a wet-laid process by means of an inclined wire machine. Moreover, in the context of the present application, the non-woven fabric is a single layer, i.e. it comprises only one layer, in contrast to a bi- or multilayer non-woven fabric.

The term "wood pulp", as used herein, may in particular mean (cellulosic) pulp fibers originating from wood, such as from softwood or hardwood, in contrast to cellulosic pulps derived from crops, grass and other annual plants (such as abaca, jute, hemp, cotton, kenaf, sisal, esparto, etc.) and in contrast to synthetic pulp fibers (such as polyethylene pulp) and in contrast to regenerated cellulose fibers, Wood pulp may in particular denote a (lignocellulosic) fibrous material prepared by (preferably chemically) separating cellulose fibers from wood, such as by a kraft process (sulfate process).

The non-woven fabric comprises at least 70 wt.-% of wood pulp. Besides wood pulp, the non-woven fabric may comprise other types of fibers, such as other cellulosic pulps (e.g. cellulosic pulps derived from crops, grass and other annual plants as exemplified above), regenerated cellulose (e.g. viscose or lyocell), synthetic fibers (e.g. PE, PP, PET, PVA) and mixtures thereof. However, the blending of additional fibers other than wood pulp typically may lead to an increase in costs without further improving the separator characteristics (such as in terms of a reduced ESR) so that it is advantageous that wood pulp is the main (and preferably only) fiber component.

In an embodiment, the non-woven substrate comprises at least 80 wt.-% of wood pulp, in particular at least 85 wt.-% of wood pulp, in particular at least 90 wt.-% of wood pulp, in particular at least 95 wt.-% of wood pulp.

In an embodiment, the non-woven fabric comprises (substantially) 100 wt.-% of wood pulp. It may be advantageous if the non-woven fabric comprises (substantially) no other fibers than wood pulp in terms of both low raw material costs and low manufacturing process costs.

In an embodiment, the wood pulp has an average (in particular a weight average) fiber length of from 0.5 to 4.0 mm, in particular of from 1.0 mm to 4.0 mm, in particular of from 1.2 mm to 3.8 mm, in particular of from 1.4 mm to 3.6 mm, in particular of from 1.5 mm to 3.5 mm, in particular of from 1.8 mm to 3.3 mm, in particular of from 2.0 mm to 3.2 mm. In an embodiment, the wood pulp has an average fiber length of from 0.5 to 2.0 mm (in particular in case of hardwood pulp). In an embodiment, the wood pulp has an average fiber length of from 2.0 to 4.0 mm (in particular in case of softwood pulp). It is to be understood that the fiber lengths of the wood pulp fibers may be subject to a Gaussian distribution, for instance substantially all of the individual wood pulp fibers may have a fiber length within the range of more than 0 mm to approximately 6 mm. It might be advantageous that the fiber lengths of the individual wood pulp fibers may be substantially uniform, i.e. that the fiber length distribution of the individual wood pulp fibers may be relatively narrow. It is further to be understood that the above fiber lengths represent the (initial) fiber length before applying a papermaking refining process.

In an embodiment, the wood pulp has a fiber coarseness of from 0.9 to 3.5 dtex, such as from 0.9 to 1.5 dtex (in particular in case of hardwood pulp) or from 1.6 to 3.5 dtex (in particular in case of softwood pulp). The fiber coarseness is defined as the weight per unit length of the fiber. A fiber coarseness of 1 dtex corresponds to 100 mg/km. The fiber coarseness may be determined in accordance with TAPPI test method T 234 cm-02.

In an embodiment, the wood pulp comprises softwood pulp, hardwood pulp or blends thereof. Softwood pulp may in particular denote pulp of wood from gymnosperm trees, in particular coniferous wood, such as pines, firs or spruce etc., and may have an average fiber length of from 2.0 to 4.0 mm. Hardwood pulp may in particular denote pulp of wood from angiosperm trees, in particular dicot trees, such as birch, poplar, eucalyptus, maple or basswood, and may have an average fiber length of from 0.5 to 2.0 mm. In particular, the wood pulp comprises softwood pulp which may be advantageous in terms of mechanical strength.

In an embodiment, the wood pulp comprises kraft wood pulp, i.e. wood pulp obtained by a by a kraft (pulping) process (also referred to as sulfate process).

While all kind of chemical pulp cooking techniques (e.g. kraft cooking, sulfite cooking, soda cooking) may be suitable provided that they use wood base cellulose as raw material, kraft cooking is preferred because it generates high strength fibers compared to the other cooking methods. Mechanical or semi-mechanical pulps may be disadvantageous because of their greater amount of undesired ionic and mineral contaminants.

In an embodiment, the wood pulp comprises unbleached wood pulp. Bleached pulp may be suitable as well if the bleaching process is performed according to a Total Chlorine Free sequence (TCF) to ensure maintaining a low residual chlorine level in the separator.

In an embodiment, the wood pulp has a (Schopper Riegler) freeness value (which may also be referred to as a drainage index or beating degree) of from 10 to 35 °SR, in particular from 10 to 30 °SR. Such low freeness value may be advantageous in that an excessive densification of the web during paper making process may be prevented. Conventional refining equipment, such as beaters, conical or disk refiners, may be used to adapt the drainage index to the desired value. The freeness value may be determined in accordance with DIN ISO 5267-1. It is however also possible to use unbeaten and/or non-refined wood pulp.

In an embodiment, the non-woven fabric does not comprise or substantially not comprise any one of a binder, a wet-strength agent and an additive. Thus, the non-woven fabric (as well as the separator) may be substantially only composed of fibers. The term "binder", as used herein, may in particular denote a chemical compound that is able to bind (e.g. by forming covalent bonds, by ionic interactions or the like) to two or more fibers, thereby interconnecting the fibers, resulting in an increased tensile strength of the non-woven fabric. The term "wet-strength agent", as used herein, may in particular denote an agent that improves the tensile strength of the non-woven web in the wet state. The term "additive", as used herein, may in particular denote a chemical agent (other than a binder or wet-strength agent) that may impart certain properties to the non-woven web. With regard to embodiments comprising "substantially no binder, wet-strength agent and additive", binders, wet-strength agents and/or additive, if any, may still be present in relatively minor amounts of up to 3, up to 2, or up to 1 wt.-% based on the total weight of the non-woven fabric.

An important characteristic of the separator is its density of less than 0.45 g/cm³. Such ultra-low density may be achieved by preparing the single layer non-woven fabric in a wet-laid process, in particular my means of an inclined wire machine, in particular an inclined wire machine having no wet press. As a consequence of such ultra-low density, a significant reduction of the ESR may be achieved.

In an embodiment, the separator (and/or the non-woven fabric) has a density of more than 0.2 g/cm³ and less than 0.45 g/cm³, in particular a density of 0.23 g/cm³ or more and less than 0.40 g/cm³, in particular a density of 0.25 g/cm³ or more and less than 0.35 g/cm³. in particular a density of 0.26 g/cm³ or more and less than 0.32 g/cm³. The density may be calculated according to the following formula: density = basis weight / thickness; for instance after having climatized the samples for 4 hours under standard conditions of 50% (+/-2%) relative humidity and 23 °C (+/- 1°C) (air dry density).

In an embodiment, the non-woven fabric (and/or the separator) has a basis weight of from 12 to 25 g/m², in particular of from 13 to 23 g/m², in particular of from 14 to 22 g/m². If the basis weight is less than 12 g/m², the tensile strength might be too low. If the basis weight is more than 25 g/m², the thickness might be too high. The basis weight may be determined in accordance with ISO 536.

In an embodiment, the separator (and/or the non-woven fabric) has a thickness of from 25 to 150 µm, in particular of from 40 to 125 µm, in particular of from 50 to 100 µm. The thickness may be determined in accordance with ISO 534.

In an embodiment, the separator (and/or the non-woven fabric) has an air permeability of from 500 to 2500 l/m²s, in particular of from 1500 to 2500 l/m²s. An advantageously high air permeability of from 1500 to 2500 l/m²s may in particular be achieved if the non-woven fabric is wet-laid by means of an inclined wire papermaking machine. The air permeability may be determined in accordance with ISO 9237.

In a second aspect, the present invention relates to a method of producing a separator, in particular a separator according to the first aspect, wherein the method comprises the steps of forming a non-woven fabric comprising at least 70 wt.-% of wood pulp by a wet-laid process and drying the non-woven fabric to thereby yield the separator, wherein the separator has a density of less than 0.45 g/cm³. Thus, the separator according to the present invention is obtainable by a method according to the second aspect.

For instance, the non-woven fabric may be formed by a conventional wet-laid process using a wet-laid machine, in particular an inclined wire machine, as described for instance in US 3,785,922. An inclined wire machine (or inclined wire papermaking machine) is a papermaking machine where the screen (also denoted wire), on which the fiber suspension(s) (also denoted ply/plies) is/are wet-laid, is inclined, rather than horizontally arranged as it is the case in a Fourdrinier type paper machine.

In an embodiment, the non-woven fabric is formed by a wet-laid process by means of an inclined wire machine. By taking this measure, a particularly good formation of the non-woven fabric with excellent evenness may be achieved allowing the formation of an ultra-low density (< 0.45 g/cm³) single layer separator exhibiting a particularly reduced ESR.

The drying of the non-woven fabric is not particularly limited and any drying process and drying equipment customary in the field of papermaking can be used. The drying step may preferably be carried out such that water stemming from the formation of the non-woven fabric is substantially removed to yield a substantially dry non-woven substrate to be used as a separator.

In a third aspect, the present invention relates to a capacitor, in particular an aluminum electrolytic capacitor, comprising a positive electrode, a negative electrode and a separator according to the first aspect. The separator is interposed between the positive electrode and the negative electrode. In addition, the capacitor may comprise an electrolyte, such as a liquid and/or a solid electrolyte.

In an embodiment, the capacitor is an aluminum electrolytic capacitor. In this embodiment, the electrodes (i.e. the positive electrode and the negative electrode) comprise or are made of aluminum. In particular, the electrodes are preferably aluminum foils which may be electrically insulated by a thin aluminum dioxide layer formed on the anode surface. In addition, the aluminum electrolytic capacitor may comprise a liquid electrolyte, at least a part thereof may impregnate the separator.

In an embodiment, the separator according to the first aspect as described herein is used as the only separator in the capacitor. In other words, the capacitor may comprise only a single layer separator according to the first aspect.

In an alternative embodiment, the separator according to the first aspect as described herein may be combined with another separator, for instance a high density kraft separator (having a density in the range of 0.75 to 0.95 g/cm³). Thus, in addition to the separator according to the first aspect, the capacitor may comprise another separator, for instance a high density kraft separator. By taking this measure, short circuit protection and electrical performance may be balanced to the desired needs of the individual case.

The present invention is further described by the following examples, which are solely for the purpose of illustrating specific embodiments and are not construed as limiting the scope of the invention in any way.

### Examples

Initially, experiments were performed by means of a Rapid-Köthen hand sheet maker (see Example 1) and subsequently the results were confirmed by using an inclined wire pilot machine (see Example 2).

### Example 1

3 sets of hand sheets made of 100% unbleached kraft softwood pulp refined at 22 °SR and having a weighted fiber length of 2.7 mm were formed on a Rapid-Köthen forming machine.

A reference sample was dried using a regular Rapid-Köthen drying equipment. The reference sample had a density of 0,488 g/cm³ and a thickness of 61,5 µm and thus corresponds to a regular low-density kraft paper (e.g. about 0,50 g/cm³) currently available on the market.

Sample 1 and sample 2 according to the present invention were oven dried in order to limit sheet densification. Sheets with densities of 0,285 and 0,269 g/cm³, respectively, were produced.

Various material properties of the non-woven fabrics of the reference sample and of the samples 1 and 2 according to the present invention were determined, the results of which are summarized in Table 1 below:
The basis weight was determined by a test method based on ISO 536 standard. The applied test method differs from the standard method by the number of data points employed for determining the average basis weight (standard method: 20 samples of 0.5 m² each, applied test method: 10 samples of 0.01 m² each). It is assumed that this difference has no influence on the results and conclusions.

The thickness was determined by a test method based on ISO 534 standard. The applied test method differs from the standard method by the number of data points employed for determining the average thickness (standard method: 20 data points (4 samples and 5 measurement on each), applied test method: 3 data points). It is assumed that this difference has no influence on the results and conclusions.

The density was calculated according to the following formula: density = basis weight / thickness; after having climatized the samples for 4 hours under standard conditions of 50% (+/-2%) relative humidity and 23 °C (+/- 1°C) (air dry density).

The air permeability was determined by a test method based on ISO 9237. The applied test method differs from the reference method by the conditioning conditions of the samples. According to ISO 9237 standard, sample conditioning must be performed according to ISO 139 whereas according to the applied test method, samples where climatized for 4 hours under standard conditions of 50% (+/-2%) Relative Humidity and 23 °C (+/- 1°C). It is assumed that this difference has no influence on the results and conclusions.

The electrical resistance (ESR) of the separator is measured by means of an LCR meter coupled to a pair of electrodes in which a separator sample is inserted. Prior to the measurement, the sample is impregnated with a home-made GBL based electrolyte having a conductivity of 0.9 mS/cm. 10 samples of 5x5 cm are measured and used to calculate the average electrical resistance of the separator. The measurement is performed at several frequencies (100 Hz, 1kHz, 10kHz or 100kHz).

The resistivity ρ (rho) in ohm·cm of the sample was calculated according to the following formula: Rho = ESRxA/d where "ESR" is the electrical resistance measured in Ohm; "d" is the thickness of the separator in cm; "A" is the surface area of the electrodes in cm².

**[Table 1]**

| | | | Reference | Sample 1 | Sample 2 |
|---|---|---|---|---|---|
| | | | Rapid-Köthen dried | Oven dried | Oven dried |
| Basis weight | | g/m² | 30.0 | 29.8 | 16.8 |
| Thickness | | µm | 61.5 | 104.5 | 62.5 |
| Density | | g/cm³ | **0.488** | **0.285** | **0.269** |
| Air | | l/m²·sec | 153 | 505 | 1490 |
| Permeability | | | | | |
| Measured ESR | 1 kHz | Ω | 5.72 | 4.77 | 3.25 |
| | 10 kHz | Ω | **4.74** | **4.06** | **2.46** |
| | 100 kHz | Ω | 4.55 | 3.97 | 2.36 |
| Calculated resistivity | 1 kHz | Ω·m | 89.4 | 43.9 | 50.0 |
| | 10 kHz | Ω·m | **74.1** | **37.4** | **37.8** |
| | 100 kHz | Ω·m | 71.1 | 36.5 | 36.3 |

As can be taken from the results as shown in Table 1, when the density is reduced to an ultra-low level like in sample 1 (41% density reduction), the electrical resistance is reduced by 15% (ESR at 10 kHz), but the resistivity drops almost by a factor 2, from 74.1 to 37.4 Ohm·m at 10 kHz demonstrating the significant effect of the density reduction.

Moreover, when adjusting the basis weight like in sample 2 in order to maintain the thickness to a similar level as the reference sample, the electrical resistance drops also almost by a factor 2, from 4.74 Ohm to 2.46 Ohm. This proves the great potential of the invention in terms of electrical resistance and the resistivity drop corresponds to the density level of sample 1.

### Example 2

Sample 3 was produced on an inclined wire single layer pilot machine using the same fiber furnish as in Example 1. The same pulp, same refining conditions and fiber mixture were utilized as in Example 1.

The material properties of the non-woven fabric of sample 3 are shown in Table 2:

**[Table 2]**

| | | | Sample 3 |
|---|---|---|---|
| Basis weight | | g/m² | 14.91 |
| Thickness | | µm | 61.5 |
| Density | | g/cm³ | **0.242** |
| Air permeability TT | | l/m²·sec | 1990 |
| ESR | 1 KHz | Ω | 2.95 |
| | 10 KHz | Ω | **2.32** |
| | 100 KHz | Ω | 2.24 |
| | | | |
| Resistivity calculated | 1 KHz | Ω.m | 46.1 |
| | 10 KHz | Ω.m | **36.3** |
| | 100 KHz | Ω.m | 35.0 |

As evident from Table 2, the results of the pilot machine confirm those of the hand sheets. Using an inclined wire machine enables to produce ultra-low density separators(<0,45g/cm³). The electrical resistance of such products is dramatically reduced by almost a factor 2 compared to the reference material. While the present invention has been described in detail by way of specific embodiments and examples, the invention is not limited thereto and various alterations and modifications are possible, without departing from the scope of the invention as set forth with the appended claims.

## Claims

1. A separator suitable for a capacitor, in particular an aluminum electrolytic capacitor,
wherein the separator is a single layer, inclined wire wet-laid non-woven fabric comprising at least 70 wt.-% of wood pulp,
wherein the separator has a density of less than 0.45 g/cm³,
wherein the wood pulp is unbeaten wood pulp or wood pulp having a freeness value of from 10 to 35 °SR, as determined in accordance with DIN ISO 5267-1.

2. The separator according to claim 1, wherein the separator has a density of more than 0.2 g/cm³ and less than 0.45 g/cm³, in particular a density of 0.25 g/cm³ or more and less than 0.40 g/cm³.

3. The separator according to claim 1 or 2, wherein the non-woven fabric comprises at least 80 wt.-% of wood pulp, in particular at least 90 wt.-% of wood pulp.

4. The separator according to any one of the preceding claims, wherein the non-woven fabric comprises 100 wt.-% of wood pulp.

5. The separator according to any one of the preceding claims, wherein the wood pulp has an average fiber length of from 0.5 to 4.0 mm, in particular of from 2.0 to 4.0 mm.

6. The separator according to any one of the preceding claims, wherein the wood pulp comprises softwood and/or hardwood pulp, in particular softwood pulp.

7. The separator according to any one of the preceding claims, wherein the wood pulp comprises kraft wood pulp.

8. The separator according to any one of the preceding claims, wherein the non-woven fabric does not comprise or substantially not comprise any one of a binder, a wet-strength agent and an additive.

9. The separator according to any one of the preceding claims, wherein the non-woven fabric has a basis weight of from 12 to 25 g/m², as determined in accordance with ISO 536.

10. The separator according to any one of the preceding claims, wherein the separator has a thickness of from 25 to 100 µm, as determined in accordance with ISO 534.

11. The separator according to any one of the preceding claims, wherein the separator has an air permeability of from 500 to 2500 l/m²s, as determined in accordance with ISO 9237.

12. A method of producing a separator according to any one of claims 1 to 11, comprising the steps of
forming a non-woven fabric comprising at least 70 wt.-% of wood pulp by a wet-laid process by means of an inclined wire machine,
drying the non-woven fabric to thereby yield the separator,
wherein the separator has a density of less than 0.45 g/cm³,
wherein the wood pulp is unbeaten wood pulp or wood pulp having a freeness value of from 10 to 35 °SR, as determined in accordance with DIN ISO 5267-1.

13. The method according to claim 12, wherein the non-woven fabric is formed by a wet-laid process by means of an inclined wire machine having no wet press.

14. A capacitor, in particular an aluminum electrolytic capacitor, comprising a positive electrode, a negative electrode and a separator according to any one of claims 1 to 11 interposed between the positive electrode and the negative electrode.

## Patentansprüche

1. Separator, der für einen Kondensator, insbesondere einen Aluminium-Elektrolytkondensator, geeignet ist,
wobei der Separator ein einlagiger, Schrägsieb-nassgelegter Vliesstoff ist, der mindestens 70 Gew.-% Holzzellstoff umfasst,
wobei der Separator eine Dichte von weniger als 0,45 g/cm³ hat,
wobei der Holzzellstoff ungemahlener Holzzellstoff oder Holzzellstoff mit einem Mahlgrad von 10 bis 35 °SR ist, bestimmt gemäß DIN ISO 5267-1.

2. Separator nach Anspruch 1, wobei der Separator eine Dichte von mehr als 0,2 g/cm³ und weniger als 0,45 g/cm³ hat, insbesondere eine Dichte von mehr als 0,25 g/cm³ und weniger als 0,40 g/cm³.

3. Separator nach Anspruch 1 oder 2, wobei der Vliesstoff mindestens 80 Gew.-% Holzzellstoff, insbesondere mindestens 90 Gew.-% Holzzellstoff, umfasst.

4. Separator nach einem der vorherigen Ansprüche, wobei der Vliesstoff 100 Gew.-% Holzzellstoff umfasst.

5. Separator nach einem der vorherigen Ansprüche, wobei der Holzzellstoff eine durchschnittliche Faserlänge von 0,5 bis 4,0 mm, insbesondere von 2,0 bis 4,0 mm, hat.

6. Separator nach einem der vorherigen Ansprüche, wobei der Holzzellstoff Nadel- und/oder Laubholzzellstoff umfasst, insbesondere Nadelholzzellstoff.

7. Separator nach einem der vorherigen Ansprüche, wobei der Holzzellstoff Kraftholzzellstoff umfasst.

8. Separator nach einem der vorherigen Ansprüche, wobei der Vliesstoff keines oder im Wesentlichen keines von einem Bindemittel, einem Nassfestmittel und einem Additiv umfasst.

9. Separator nach einem der vorherigen Ansprüche, wobei der Vliesstoff ein Flächengewicht von 12 bis 25 g/m² aufweist, bestimmt gemäß ISO 536.

10. Separator nach einem der vorherigen Ansprüche, wobei der Separator eine Dicke von 25 bis 100 µm aufweist, bestimmt gemäß ISO 534.

11. Separator nach einem der vorherigen Ansprüche, wobei der Separator eine Luftpermeabilität von 500 bis 2500 l/m²s aufweist, bestimmt gemäß ISO 9237.

12. Verfahren zur Herstellung eines Separators nach einem der Ansprüche 1 bis 11, wobei das Verfahren die folgenden Schritte umfasst:
Bilden eines Vliesstoffs, der mindestens 70 Gew.-% Holzzellstoff umfasst, durch ein Nasslegeverfahren mittels einer Schrägsiebmaschine,
Trocknen des Vliesstoffs, um dadurch den Separator zu ergeben,
wobei der Separator eine Dichte von weniger als 0,45 g/cm³ hat,
wobei der Holzzellstoff ungemahlener Holzzellstoff oder Holzzellstoff mit einem Mahlgrad von 10 bis 35 °SR ist, bestimmt gemäß DIN ISO 5267-1.

13. Verfahren nach Anspruch 12, wobei der Vliesstoff durch ein Nasslegeverfahren mittels einer Schrägsiebmaschine, die keine Nasspresse hat, gebildet wird.

14. Kondensator, insbesondere ein Aluminium-Elektrolytkondensator, der eine positive Elektrode, eine negative Elektrode und einen Separator nach einem der Ansprüche 1 bis 11 aufweist, wobei der Separator zwischen der positiven Elektrode und der negativen Elektrode angeordnet ist.

## Revendications

1. Séparateur approprié pour un condensateur, en particulier un condensateur électrolytique en aluminium,
dans lequel le séparateur est un tissu non tissé en une seule couche appliqué par voie humide et toile inclinée, comprenant au moins 70 % en poids de pâte de bois,
dans lequel le séparateur présente une densité inférieure à 0,45 g/cm³,
dans lequel la pâte de bois est une pâte de bois non battue ou une pâte de bois présentant un indice d'égouttage de 10 à 35°SR, tel que déterminé conformément à la norme DIN ISO 5267-1.

2. Séparateur selon la revendication 1, dans lequel le séparateur présente une densité supérieure à 0,2 g/cm³ et inférieure à 0,45 g/cm³, en particulier une densité de 0,25 g/cm³ ou plus et inférieure à 0,40 g/cm³.

3. Séparateur selon la revendication 1 ou 2, dans lequel le tissu non tissé comprend au moins 80 % en poids de pâte de bois, en particulier au moins 90 % en poids de pâte de bois.

4. Séparateur selon l'une quelconque des revendications précédentes, dans lequel le tissu non tissé comprend 100 % en poids de pâte de bois.

5. Séparateur selon l'une quelconque des revendications précédentes, dans lequel la pâte de bois présente une longueur de fibre moyenne de 0,5 à 4,0 mm, en particulier de 2,0 à 4,0 mm.

6. Séparateur selon l'une quelconque des revendications précédentes, dans lequel la pâte de bois comprend de la pâte de bois tendre et/ou de bois dur, en particulier de la pâte de bois tendre.

7. Séparateur selon l'une quelconque des revendications précédentes, dans lequel la pâte de bois comprend de la pâte de bois kraft.

8. Séparateur selon l'une quelconque des revendications précédentes, dans lequel le tissu non tissé ne comprend pas ou ne comprend sensiblement pas l'un quelconque d'un liant, d'un agent résistant à l'humidité et d'un additif.

9. Séparateur selon l'une quelconque des revendications précédentes, dans lequel le tissu non tissé présente un poids de base de 12 à 25 g/m², tel que déterminé conformément à la norme ISO 536.

10. Séparateur selon l'une quelconque des revendications précédentes, dans lequel le séparateur présente une épaisseur de 25 à 100 um, telle que déterminée conformément à la norme ISO 534.

11. Séparateur selon l'une quelconque des revendications précédentes, dans lequel le séparateur présente une perméabilité à l'air de 500 à 2 500 l/m²s, telle que déterminée conformément à la norme ISO 9237.

12. Procédé de fabrication d'un séparateur selon l'une quelconque des revendications 1 à 11, comprenant les étapes consistant à former un tissu non tissé comprenant au moins 70 % en poids de pâte de bois par un procédé de dépôt par voie humide au moyen d'une machine à toile inclinée,
sécher le tissu non tissé pour produire ainsi le séparateur,
dans lequel le séparateur présente une densité inférieure à 0,45 g/cm³,
dans lequel la pâte de bois est une pâte de bois non battue ou une pâte de bois présentant un indice d'égouttage de 10 à 35°SR, tel que déterminé conformément à la norme DIN ISO 5267-1.

13. Procédé selon la revendication 12, dans lequel le tissu non tissé est formé par un procédé d'application par voie humide au moyen d'une machine à toile incliné ne présentant pas de presse à l'état humide.

14. Condensateur, en particulier un condensateur électrolytique en aluminium, comprenant une électrode positive, une électrode négative et un séparateur selon l'une quelconque des revendications 1 à 11 interposé entre l'électrode positive et l'électrode négative.
